# EUROPEAN PATENT APPLICATION

(11) **EP 2 934 056 A1**
(43) Date of publication of application: **21.10.2015**
(21) Application number: 13865802.6
(22) Date of filing: 28.10.2013
(51) Int. Cl.: H04W 72/04, H04W 16/32, H04W 36/04

(54) **USER TERMINAL, RADIO BASE STATION, RADIO COMMUNICATION METHOD AND CONTROL APPARATUS**

(30) Priority: 17.12.2012 JP 2012274880
(71) Applicant: NTT DOCOMO, INC., Chiyoda-ku Tokyo 100-6150 (JP)
(72) Inventor: TAKEDA, Kazuaki, Tokyo 100-6150 (JP); NAGATA, Satoshi, Tokyo 100-6150 (JP); TAKAHASHI, Hideaki, Tokyo 100-6150 (JP); HAPSARI, Wuri Andarmawanti, Tokyo 100-6150 (JP); UCHINO, Tooru, Tokyo 100-6150 (JP); ISHII, Hiroyuki, Palo Alto, California 94304 (US)
(74) Representative: Hoffmann Eitle
(86) International application number: PCT/JP2013/079064
(87) International publication number: WO 2014/097743

(57) **Abstract**

The present invention is designed to prevent the deterioration of network quality due to coverage holes between small cells, or deterioration of service quality arising from that, in a HetNet. The radio communication method of the present invention is a radio communication method in a user terminal (UE) that communicates with at least one of a macro base station (MeNB) that forms a macro cell (M) and a small base station (SeNB) that forms a small cell (S) such that the small cell (S) overlaps the macro cell (M) at least in part, and includes the steps of communicating with the small base station (SeNB), and receiving a paging signal from the macro base station (MeNB) in a first carrier frequency (F1) when communication is in progress with the small base station (SeNB) in a second carrier frequency (F2).

## Description

### Technical Field

The present invention relates to a user terminal, a radio base station, a radio communication method and a control apparatus in a next-generation mobile communication system in which macro cells and small cells are arranged to overlap each other at least in part.

### Background Art

Successor systems of long-term evolution (LTE) have been under study for the purpose of achieving further broadbandization and increased speed beyond LTE (referred to as, for example, "LTE-advanced" or "LTE enhancement" (hereinafter referred to as "LTE-A")). In the LTE-A system, an HetNet (Heterogeneous Network) to form a small cell (for example, a pico cell, a femto cell and so on), which has a local coverage of a radius of approximately several tens of meters, in a macro cell, which has a wide coverage of a radius of approximately several kilometers, is under study (see, for example, non-patent literature 1).

Regarding HetNets, a study is in progress to use a carrier of a relatively low frequency band (for example, 2 GHz) (hereinafter referred to as a "low frequency band carrier") in a macro cell, and use a carrier of a relatively high frequency band (for example, 3.5 GHz) (hereinafter referred to as a "high frequency band carrier") in a small cell. Generally speaking, propagation characteristics are better in a lower frequency band than in a high frequency band. Consequently, a low frequency band carrier is suitable for a macro cell having a wide coverage. A high frequency band carrier has poorer transmission characteristics than a low frequency band carrier, and therefore is suitable for a small cell having a local coverage.

### Citation List

### Non-Patent Literature

Non-Patent Literature 1: 3GPP TR 36.814 "E-UTRA Further Advancements for E-UTRA Physical Layer Aspects"

### Summary of the Invention

### Technical Problem

As noted earlier, a high frequency band carrier has poorer propagation characteristics than those of a low frequency band carrier. Consequently, when a high frequency band carrier is used in small cells, areas that are not included in any of the small cells' coverages (hereinafter referred to as "coverage holes") are more likely to be produced. For example, places behind buildings where electric waves have difficulty reaching are likely to be coverage holes.

So, in order to prevent coverage holes from being produced, it may be possible to arrange many small cells, adjust these small cells' transmission power and antenna tilt and/or the like by area tuning, and so on. However, arranging many small cells and adjusting their transmission power and antenna tilt and/or the like might result in increased operation costs, and are therefore undesirable.

As noted earlier, in a HetNet, for example, an increased handover failure rate between small cells, an increased likelihood that small cells are out-of-service range, there is a possibility that network quality is deteriorated, due to coverage holes between small cells.

Now, from the user's perspective, the deterioration of network quality may be rephrased as deterioration of the quality of services provided in a mobile communication system. Also, such services may be roughly classified into real-time-based communication services such as sound/voice services, and best-effort-based communication services. Best-effort-based communication services refer to, for example, web browsing, email and so on.

Regarding real-time-based sound/voice services, if events occur where communication is disconnected or calls cannot be received due to being out-of-service range, there is a possibility that severe deterioration of service quality is caused. Regarding data communication services, which are generally provided on a best-effort basis, the possibility is high that disconnection of communication and the inability to receive calls due to being out-of-service range may not cause severe deterioration of service quality as with sound/voice services. That is, in the event of data communication services, even when disconnection occurs while communication is in progress, this is not seen as complete disconnection from the user's perspective, and is more likely to be seen as a slight decrease in throughput, and, in that case, the deterioration of service quality is not so significant. Also, even when calls cannot be received due to being out-of-service range, for example, given that the conditions pertaining to immediacy/promptness required to receive email are not as high as those required to receive sound/voice, the deterioration of service quality is unlikely to be so significant.

The present invention has been made in view of the above, and it is therefore an object of the present invention to provide a user terminal, a radio base station, a radio communication method and a control apparatus that can prevent, in a HetNet, the deterioration of network quality due to coverage holes between small cells, or the deterioration of service quality arising from that.

### Solution to Problem

A user terminal according to a first aspect of the present invention is a user terminal that communicates with at least one of a first radio base station that forms a first cell by using a first carrier frequency and a second radio base station that forms a second cell by using a second carrier frequency such that the second cell overlaps the first cell at least in part, and this user terminal has a first communication section that communicates with the first radio base station, and a second communication section that communicates with the second radio base station, and, when the second communication section is communicating with the second radio base station, the first communication section receives a paging signal from the first radio base station.

A radio base station according to a second aspect of the present invention is a radio base station that forms a first cell by using a firs carrier such that the first carrier frequency overlaps a second cell formed by using a second carrier frequency at least in part, and this radio base station has a communication section that communicates with a user terminal, and, when the user terminal is communicating with another radio base station forming a second cell, in the second carrier frequency, the communication section transmits a paging signal to the user terminal in the first carrier frequency.

A radio communication method according to a third aspect of the present invention is a radio communication method in a user terminal that communicates with at least one of a first radio base station that forms a first cell by using a first carrier frequency and a second radio base station that forms a second cell by using a second carrier frequency such that the second cell overlaps the first cell at least in part, and the radio communication method includes the steps of communicating with the second radio base station, and receiving the paging signal from the first radio base station when communication is in progress with the second radio base station.

A control apparatus according to a fourth aspect of the present invention is a control apparatus in a mobile communication system having a user terminal that communicates with at least one of a first radio base station that forms a first cell by using a first carrier frequency and a second radio base station that forms a second cell by using a second carrier frequency such that the second cell overlaps the first cell at least in part, and the control apparatus that controls the first radio base station, the second radio base station and the user terminal, and, when the user terminal is communicating with the second radio base station and furthermore monitoring a paging signal from the first radio base station, when communication for newly generated data is started, whether the paging signal is transmitted from the first radio base station, or whether the data is transmitted in communication with the second radio base station, is controlled depending on a type of the data.

### Technical advantage of the Invention

According to the present invention, it is possible to prevent, in a HetNet, the deterioration of network quality due to coverage holes between small cells, or the deterioration of service quality arising from that.

### Brief Description of the Drawings

FIG. 1 is a conceptual diagram of a HetNet;
FIG. 2 provides diagrams to explain modes of carrier aggregation in a HetNet;
FIG. 3A is a sequence diagram to show a radio communication method according to a first example of the present invention;
FIG. 3B is a sequence diagram to show a radio communication method according to a second example of the present invention;
FIG. 3C is a sequence diagram to show a radio communication method according to a third example of the present invention;
FIG. 4 provides diagrams to explain a radio communication method according to the present invention;
FIG. 5 provides diagrams to explain a radio communication method according to the present invention;
FIG. 6 is a schematic diagram to show an example of a radio communication system according to the present embodiment;
FIG. 7 is a diagram to explain an overall structure of a radio base station according to the present embodiment;
FIG. 8 is a diagram to explain an overall structure of a user terminal according to the present embodiment;
FIG. 9 is a diagram to explain a functional structure of a macro base station according to the present embodiment;
FIG. 10 is a diagram to explain a functional structure of a small base station according to the present embodiment;
FIG. 11 is a diagram to explain a functional structure of a user terminal according to the present embodiment; and
FIG. 12 is a flowchart to show the operation of a higher station apparatus according to a modified example of the present embodiment.

### Description of Embodiments

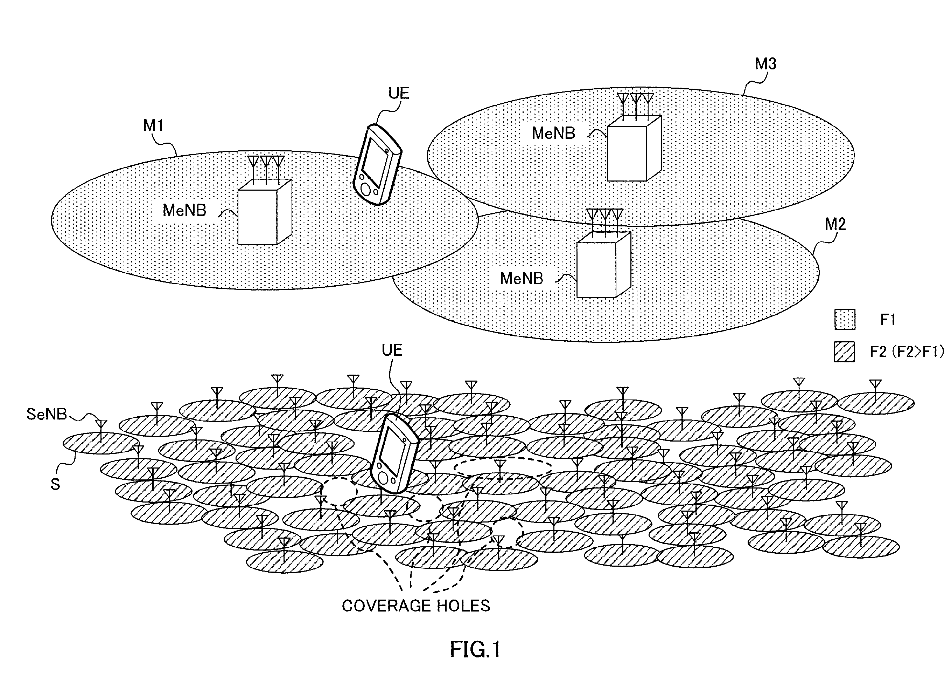

FIG. 1 is a conceptual diagram of a HetNet. As shown in FIG. 1, a HetNet is a radio communication system in which many small cells S are arranged to geographically overlap macro cells M1 to M3. The HetNet includes radio base stations (hereinafter referred to as "macro base stations") MeNB that form each macro cell M, radio base stations (hereinafter referred to as "small base stations") SeNB that form each small cell S, and a user terminal UE that communicates with at least one of the macro base stations MeNB and the small base stations SeNB.

As shown in FIG. 1, in macro cells M1 to M3, for example, a carrier F1 of a relatively low frequency band such as 800 MHz and 2 GHz (hereinafter referred to as the "low frequency band carrier") is used. In many small cells S, for example, a carrier F2 of a relatively high frequency band such as 3.5 GHz (hereinafter referred to as the "high frequency band carrier") is used. Note that 800 MHz, 2 GHz and 3.5 GHz are simply examples. It is equally possible to use 3.5 GHz for the carrier for the macro cells M, or use 800 MH, 2 GHz, 800 MHz, 2 GHz, 1.7 GHz and so on as the carrier for small cell S.

In the HetNet shown in FIG. 1, the capacity of the high frequency band carrier F2 becomes greater than the capacity of the low frequency band carrier F1 as the number of cells increases. Consequently, in order to improve the speed of transmission (throughput), it is preferable that the user terminal UE communicate with the small base stations SeNB by using the high frequency band carrier F2.

The propagation characteristics of the high frequency band carrier F2 are poorer than the propagation characteristics of the low frequency band carrier F1. That is, generally speaking, the high frequency band carrier F2 has a characteristic of not propagating far compared to the low frequency band carrier F1. Also, the antennas of the small cells S (small base stations SeNB) are likely to be provided in low positions compared to those of the macro cells M, and therefore are more likely to be influenced by nearby structures/establishments such as buildings, and show poor propagation characteristics. Consequently, due to coverage holes between the small cells S, there is a possibility of causing deterioration of network quality, such as an increased handover failure rate between the small cells S, an increased likelihood that the small cells S are out-of-service range, and so on.

In this way, in the HetNet shown in FIG. 1, when communication is carried out using the high frequency band carrier F2 alone for improved transmission speed (throughput), there is a possibility that the network quality deteriorates due to coverage holes between the small cells S.

The influence of this deterioration of network quality which the user can physically experience is likely to be comparatively little in best-effort-based communication such as web browsing and email, as noted earlier. With real-time-based communication such sound/voice services and sending and receiving calls for sound/voice, the influence which the user can physically experience is likely to increase, and, for example, the telephone is disconnected, emergency calls cannot be received, and so on.

So, a study is in progress to prevent deterioration of network quality (in particular, the quality of real-time-based communication such as sound/voice services, sending and receiving calls and so on) due to coverage holes between small cells S by carrying out communication simultaneously in both the macro cells M and the small cells S as in carrier aggregation (see, for example, literature 1: TS36.300, Annex J. 1, CA deployment scenario #4, and literature 2: H. Ishii et al., "A Novel Architecture for LTE-B, C-plane/U-plane Split and Phantom Cell Concept," IEEE Globecom 2012 Workshop, 2012).

Now, "carrier aggregation (CA)" here realizes wideband transmission by grouping a plurality of component carriers (CCs). The component carriers refer to carriers having a predetermined bandwidth (for example, 20 MHz), and may include the above-noted low frequency band carrier F1 and high frequency band carrier F2. Now, carrier aggregation to use the two CCs of the low frequency band carrier F1 and the high frequency band carrier F2 will be described below. Note that the number of CCs grouped in CA is not limited to two, and can be three or greater (up to five, for example).

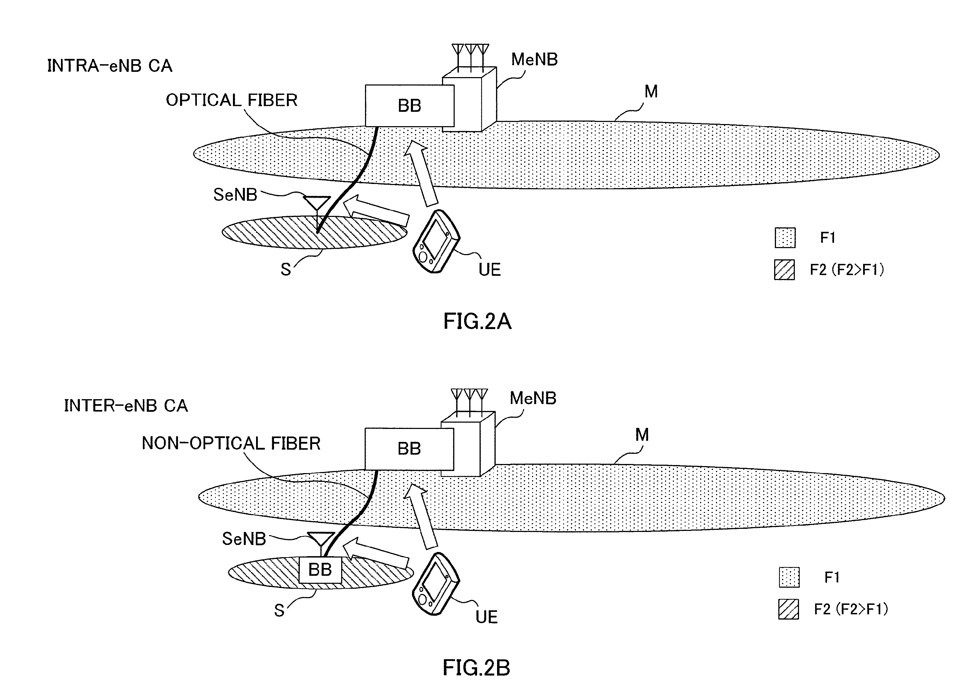

FIG. 2 provides diagrams to explain modes of carrier aggregation (CA) in a HetNet. As modes of CA in a HetNet, intra-base station carrier aggregation (intra-eNB CA) and inter-base station carrier aggregation (inter-eNB CA) may be possible.

Intra-base station carrier aggregation (intra-eNB CA) is carried out in an apparatus structure or a network structure, in which, as shown in FIG. 2A, communication control sections (for example, a BB (baseband) processing section, a scheduling section and so on) are provided only in macro base stations MeNB. In this apparatus structure or network structure, the macro base stations MeNB and small base station SeNB are connected via optical fiber. In this case, the small cell base stations SeNB may be referred to as "remote radio heads." Also, the macro base stations MeNB control both the communication carried out in the macro cells M by using the low frequency band carrier F1 and the communication carried out in the small cells S by using the high frequency band carrier F2.

Inter-base station carrier aggregation (inter-eNB CA) is carried out in an apparatus structure or a network structure, in which, as shown in FIG. 2B, communication control sections (for example, a BB (baseband) processing section, a scheduling section and so on) are provided in both macro base stations MeNB and small base stations SeNB. In this apparatus structure or network structure, the macro base stations MeNB and the small base stations SeNB may be connected via a link other than optical fiber (wired or wireless). Also, the macro base stations MeNB control the communication carried out in the macro cells M using the low frequency band carrier F1, and the small base stations SeNB control the communication carried out in the small cells S using the high frequency band carrier F2.

In the intra-base station carrier aggregation of FIG. 2A and the inter-base station carrier aggregation of FIG. 2B, communication is carried out in both the macro cell M and the small cell S simultaneously. Consequently, it is possible to cover the coverage holes between small cells S (see FIG. 1) with the coverage of the macro cell M, and prevent the deterioration of network quality due to the coverage holes between the small cells S. To be more specific, if communication is carries out such that sound/voice services are always provided from the macro cell M, the coverage holes between the small cells should have no negative influence on the sound/voice services.

However, in the intra-base station carrier aggregation of FIG. 2A, the macro base station MeNB and the small base station SeNB need to be connected via optical fiber, which costs high. Consequently, there are cases where intra-base station carrier aggregation is undesirable from the perspective of cost.

In the inter-base station carrier aggregation of FIG. 2B, the macro base station MeNB and the small base station SeNB each carry out U-plane (user data) communication control. In this case, depending on how the U-plane is finished, there is a possibility that the system for carrying out inter-base station carrier aggregation becomes complex, and, as a result of this, costs high.

In the intra-base station carrier aggregation of FIG. 2A and the inter-base station carrier aggregation of FIG. 2B, the user terminal UE needs to transmit and receive signals to and from both the macro base station MeNB and the small base station SeNB, and therefore there is also a possibility that the power consumption of the user terminal UE increases.

So, the present inventors have worked on a radio communication method, whereby it is possible to prevent the deterioration of network quality (in particular, the service quality of real-time-based communication such as sound/voice services, sending and receiving calls and so on) due to coverage holes between small cells S, without carrying out carrier aggregation, or while reducing the power consumption of user terminals UE even when carrier aggregation is carried out, and arrived at the present invention.

With the radio communication method according to the present invention, a user terminal UE communicates with at least one of a macro base station MeNB (first radio base station) that forms a macro cell M (first cell) and a small base station SeNB (second radio base station) that forms a small cell S (second cell). Also, the user terminal UE receives the paging signal from the macro base station MeNB, in the first carrier frequency, while communicating with the small base station SeNB in the second carrier frequency.

Here, the first carrier frequency is a carrier of a predetermined frequency band, used to communicate with the macro base station MeNB (the first radio base station) in the macro cell M, and may be, for example, the low frequency band carrier F1. Also, the second carrier frequency is a carrier of a predetermined frequency band, used to communicate with the small base station SeNB (second radio base station) in the small cell S, and may be, for example, the high frequency band carrier F2.

Also, "receiving the paging signal in the first carrier frequency" might also mean "carrying out an equivalent measurement procedure to the idle state and receiving the paging signal in the first carrier frequency." Now, the paging signal receiving procedure and measurement procedure in the idle state will be described below.

In the idle state, the user terminal UE monitors the paging signal based on a predetermined cycle (for example, the cycle defined by the parameter "paging cycle") in order to reduce the power consumption. The paging cycle is defined as, for example, "defaultPagingCycle" in TS 36.331. Also, the value of the paging cycle is, for example, 1.28 sec, 2.56 sec and so on. Also, the monitoring of the paging signal refers to the procedure of detecting (monitoring) whether or not the paging signal is transmitted to the user terminal UE. That is, the user terminal UE tries to detect whether or not the paging signal is transmitted to the user terminal UE per paging cycle.

In this case, the user terminal UE performs the procedure of detecting whether or not the paging signal is transmitted to the user terminal UE, only in times the paging signal needs to be monitored. That is, in times it is not necessary to monitor the paging signal, the user terminal UE assumes a sleep state or a power-save state, so that it is possible to reduce the power consumption significantly. Such operation of the user terminal may be referred to as "DRX (discontinuous reception)." Note that the DRX procedure in the idle state may be referred to as "paging DRX." Also, the monitoring period, which will be described later, is equivalent to the "times in which the paging signal needs to be monitored."

The user terminal UE moves regardless of whether or the user terminal UE is in the idle state or in the connected state, and measures the radio quality of the serving cell and nearby cells even in the idle state, and, when the cell of the best radio quality changes from the serving cell to a nearby cell, the user terminal UE makes this nearby cell of the best radio quality the serving cell. Switching of the serving cell in the idle state like this is referred to as "cell reselection." The radio quality here may be, for example, the reference signal received power (RSRP) or the reference signal received quality (RSRQ). Note that the serving cell in the idle state may be referred to as the cell where the user terminal UE serves. Note also that, generally speaking, at times to monitor the paging signal or at times before and/or after that (which may be the monitoring period, which will be described later), the user terminal UE carries out the above-noted measurements of the serving cell and nearby cells, so that the time of the sleep state is maximized and the power consumption is reduced. Regarding cell reselection, the operation is defined in, for example, TS 36.304, chapter 5.2. Alternatively, the requirements for cell reselection are defined in, for example, TS 36.133, chapter 4.2.

Now, when the user terminal UE does not measure the serving cell or nearby cells adequately -- that is, when cell reselection is not carried out adequately -- the user terminal UE is unable to serve the cell of the best radio quality, and, as a result, fails to receive the paging signal. Consequently, "receiving the paging signal in the first carrier frequency," which was mentioned earlier, becomes synonymous to "carrying out an equivalent measurement procedure to the idle state and receiving the paging signal in the first carrier frequency" or "carrying out cell reselection, which is equivalent to the idle state, and receiving the paging signal in the first carrier frequency."

For example, if a sound/voice call is received while the user terminal UE is communicating with the small base station SeNB by using the second carrier frequency, according to conventional methods, the small base station SeNB reports the receipt of the sound/voice call to the user terminal UE by using the connection that is already established. In this case, for example, a dedicated RRC control signal may be used. In this case, although no difficulty arises as long as the radio quality of the connection between the user terminal UE and the small base station SeNB is good, if, as noted earlier, coverage holes appear at a high rate between the small cells S in the second carrier frequency and the user terminal UE happens to be located in the position of a coverage hole by chance, a case then occurs where the procedure of receiving the sound/voice call cannot be executed properly. That is, if the frequency coverage holes appear in the second carrier frequency is higher than the frequency of coverage holes in the first carrier frequency, the service quality deteriorates from the perspective of receiving sound/voice calls.

Alternatively, even when the radio quality of the connection between the user terminal UE and the small base station SeNB is good and a sound/voice call is received properly, the frequency coverage holes appear is still high in the second carrier frequency, and therefore there is a high possibility that this sound/call is disconnected when the user terminal UE carries out a handover between the small base station SeNBs.

Also, when the user terminal UE performs a handover between different frequencies from the small base station SeNB to the macro base station MeNB (inter-frequency handover), considering the propagation characteristics of the second carrier frequency, there is a possibility that the radio quality between the small base station SeNB and the user terminal UE in the second carrier frequency deteriorates quickly, and, as a result, the possibility the sound/voice call is disconnected becomes high.

Consequently, when the user terminal UE is communicating with the small base station SeNB by using the second carrier frequency, it is possible to prevent the deterioration of network quality due to coverage holes between small cells S (in particular, the quality of real-time-based communication such as sound/voice services, receiving calls (including paging) and so on) by receiving the paging signal from the macro base station MeNB in the first carrier frequency.

Also, when a sound/voice call occurs, given that the user terminal UE basically communicates with the macro base station MeNB in the first carrier frequency, it is possible to avoid disconnection of the sound/voice call due to handover.

As described above, with the radio communication method according to the present invention, when the user terminal UE is communicating with the small base station SeNB by using the second carrier frequency, the user terminal UE performs the procedures for receiving and sending sound/voice calls (including the procedure for receiving the paging signal and the procedure for sending sound/voice calls, which were noted earlier) in the first carrier frequency. Consequently, with the radio communication method according to the present invention, it is possible to prevent the deterioration of the service quality of real-time-based communication (for example, the service quality of sound/voice services, receiving and sending calls and so on) due to coverage holes between small cells S.

### (Radio Communication Method)

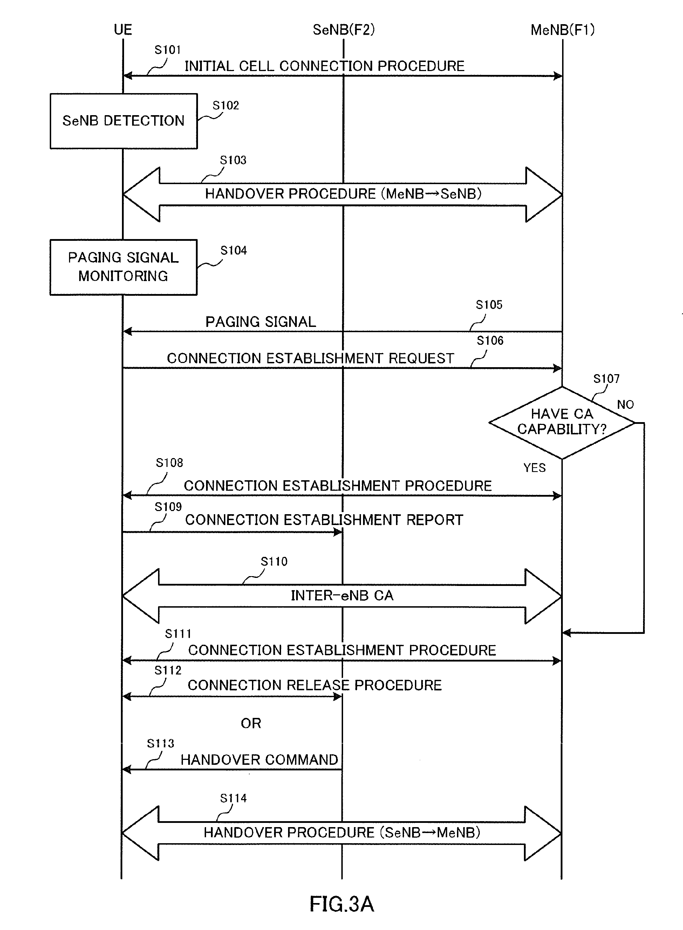

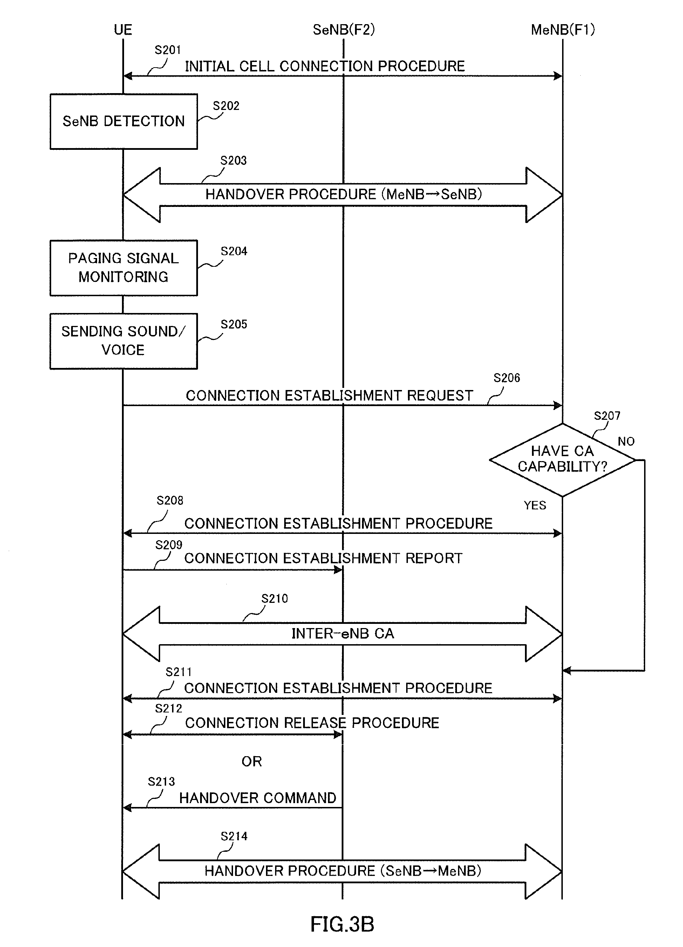

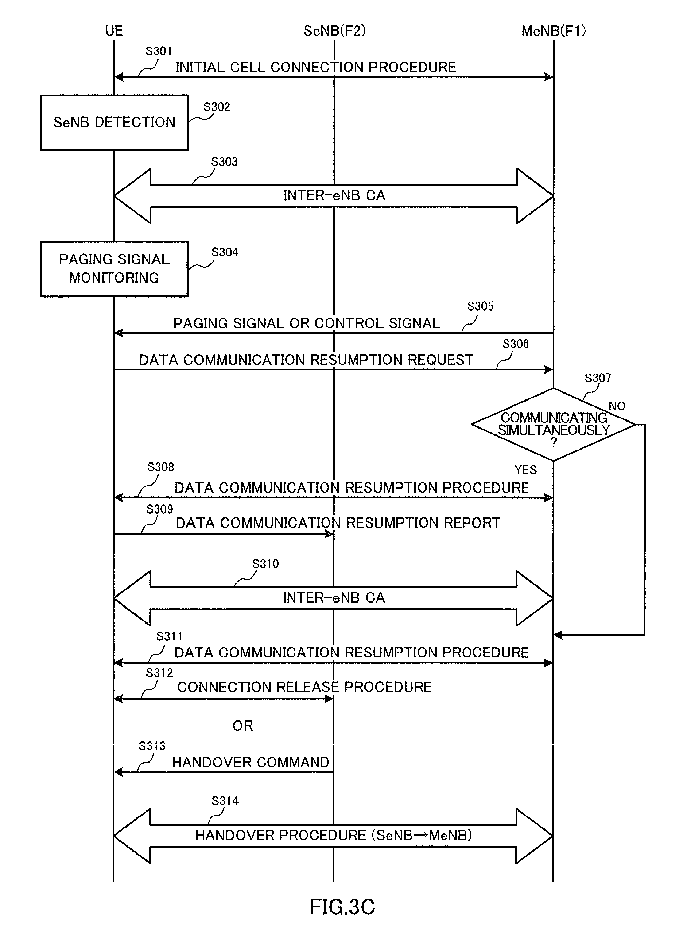

Now, radio communication methods according to first to third examples of the present invention will be described below in detail with reference to FIG. 3 to FIG. 5. Although cases will be described below where the low frequency band carrier F1 is used as a first carrier frequency and the high frequency band carrier F2 is used as a second carrier frequency, this is by no means limiting. The radio communication method according to the present invention is equally applicable to cases where carriers of the same frequency band are used for the first carrier frequency and the second carrier frequency.

Also, although a structure to execute inter-base station carrier aggregation (FIG. 2B) will be assumed below, this is not limiting either. The radio communication method according to the present invention is equally applicable to structures where intra-base station carrier aggregation is carried out (FIG. 2A).

FIG. 3A is a diagram to explain the radio communication method according to the first example of the present invention. With the radio communication method according to the first example, the operation of receiving sound/voice calls in the first carrier frequency when a user terminal UE is communicating with a small base station SeNB in the high frequency band carrier F2 will be described.

As shown in FIG. 3A, the user terminal UE performs the initial cell connection procedure for a macro base station MeNB (step S101). To be more specific, the user terminal UE detects a macro cell M by cell search, and performs the random access procedure for the macro base station MeNB, the procedure of establishing connection (for example, RRC connection and so on) with the macro base station MeNB, and so on.

Note that, in the initial cell connection procedure of step S101, (the user terminal UE may transmit CA capability reporting information to the macro base station MeNB. Now, the CA capability reporting information is information to report whether or not the user terminal UE is capable of executing carrier aggregation (CA). For the CA capability reporting information, for example, "UE Capability" and/or the like may be used.

The user terminal UE detects the small cell S in the high frequency band carrier F2 by cell search (step S102). For example, the user terminal UE may detect the small cell S based on synchronization signals and reference signals transmitted from the small base station SeNB. Alternatively, the user terminal UE may detect the small cell S based on signals transmitted from the small base station SeNB other than the synchronization signals and reference signals (for example, discovery signals and so on).

Upon detecting the small cell S in step S102, the user terminal UE performs a handover procedure from the macro base station MeNB to the small base station SeNB (step S103). To be more specific, the user terminal UE performs the procedure of establishing connection with the small base station SeNB (for example, RRC connection and so on). The user terminal UE carries out the procedure of releasing the connection with the macro base station MeNB that was established in step S101.

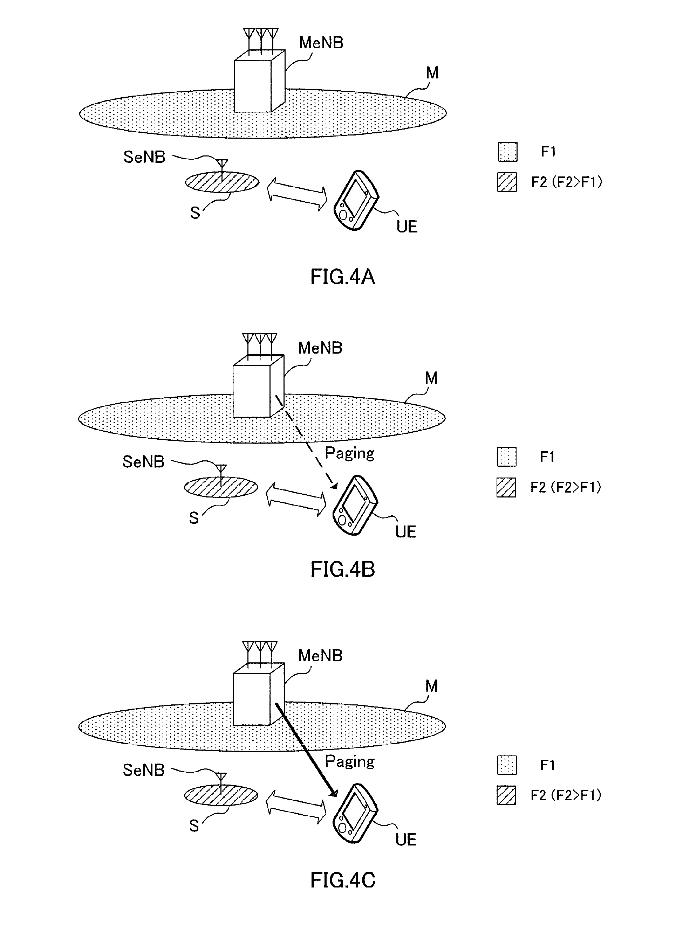

### When the handover procedure in step S103 is complete, as shown in FIG. 4A, the user terminal UE communicates with the small base station SeNB using the high frequency band carrier F2. The capacity of the high frequency band carrier F2 is generally greater than the capacity of the low frequency band carrier F1 used in the macro cell M. Consequently, by communicating with the small base station SeNB by using the high frequency band carrier F2, the data throughput improves.

Also, when, as shown in FIG. 4B, the user terminal UE is communicating with the small base station SeNB by using the high frequency band carrier F2, the user terminal UE monitors whether or not the paging signal is transmitted from the macro base station MeNB in the monitoring period of a predetermined cycle (step S104). Now, this procedure of monitoring whether or not the paging signal is transmitted may be, as noted earlier, the same as or equivalent to the paging signal receiving procedure in the idle state. Also, this procedure of monitoring whether or not the paging signal is transmitted may include the measurement procedure of measuring the radio quality of the serving cell or nearby cells, and the cell reselection procedure of switching the serving cell.

To be more specific, the user terminal UE may monitor whether or not paging reporting information is received from the macro base station MeNB in the above monitoring period. Here, the paging reporting information is information to report that the paging signal is transmitted from the macro base station MeNB, and, for example, a downlink control channel to use P-RNTI (Paging Radio Network Temporary ID) and/or the like may be used. This downlink control channel is transmitted by using, for example, a downlink control channel (PDCCH: Physical Downlink Control Channel) and an enhanced downlink control channel (EPDCCH: Enhanced PDCCH).

In the above monitoring period, the user terminal UE may stop communicating with the small base station SeNB using the high frequency band carrier F2. To be more specific, the small base station SeNB may stop allocating the PDSCH or the uplink shared data channel (PUSCH: Physical Uplink Shared Channel) to the user terminal UE in the user terminal UE's monitoring period for the paging signal transmitted from the macro base station MeNB.

Here, the monitoring period may be reported from the macro base station MeNB to the small base station SeNB in advance. For example, in the handover procedure in S103, generally, the macro base station MeNB and the small base station SeNB exchange control signal with each other. The above monitoring period may be reported using these control signals. Alternatively, this monitoring period may be reported from the user terminal UE to the small base station SeNB. In this case, the user terminal UE may report the monitoring period to the small base station SeNB every time the serving cell in the first carrier frequency changes.

Alternatively, the user terminal UE may autonomously stop communicating with the small base station SeNB using the high frequency band carrier F2 in the above monitoring period. In this case, signals that are transmitted from the small base station SeNB to the user terminal UE in this monitoring period, by using the high frequency band carrier F2 are discarded. Alternatively, in this monitoring period, the user terminal UE does not transmit signals by using the high frequency band carrier F2.

Also, as shown in FIG. 4C, upon receiving paging reporting information from the macro base station MeNB in the monitoring period, the user terminal UE receives the paging signal from the macro base station MeNB based on that paging reporting information (step S105). The user terminal UE detects a call (paging) for the user terminal UE from the macro base station MeNB when the identifier of the user terminal UE is included in the paging signal.

Note that the paging signal from the macro base station MeNB may be transmitted via, for example, the PDCCH/EPDCCH to use P-RNTI, which is the above-noted paging reporting information (or via the downlink shared data channel (PDSCH: Physical Downlink Shared Channel) designated by the downlink control information(DCI) mapped to that PDCCH/EPDCCH).

Upon detecting a call (paging) for the user terminal UE from the macro base station MeNB, the user terminal UE transmits a request for establishing connection (for example, RRC connection and so on), to the macro base station MeNB (step S106). To be more specific, for example, the user terminal UE may transmit this connection establishment request by transmitting an RRC connection request to the macro base station MeNB using a random access procedure.

Upon receiving the connection establishment request from the user terminal UE, the macro base station MeNB determines whether or not the user terminal UE has capability for executing carrier aggregation (hereinafter referred to as "CA capability") based on the CA capability reporting information in step S101 (step S107).

When the user terminal UE has CA capability (step S107: Yes), the connection establishment procedure is carried out between the macro base station MeNB and the user terminal UE (step S108). When the connection establishment procedure with the macro base station MeNB is complete, the user terminal UE transmits a connection establishment report to the small base station SeNB (step S109). Here, the connection establishment report is report information to report that connection with the macro base station MeNB has been established.

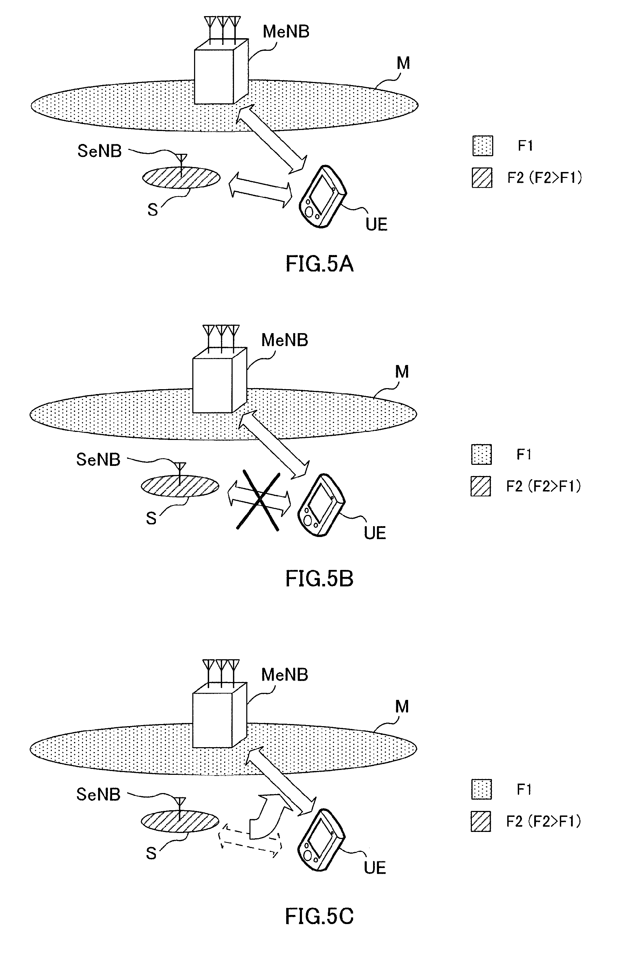

In response to the connection establishment report, as shown in FIG. 5A, communication to use both the low frequency band carrier F1 and the high frequency band carrier F2 is carried out by means of inter-base station carrier aggregation (step S110).

Note that, the macro base station MeNB and the small base station SeNB may be structured to exchange control signals with each other before or after step S109, and execute a control procedure for establishing communication using inter-base station carrier aggregation. Note that, when control signals are exchanged between the macro base station MeNB and the small base station SeNB as noted above, step S109 may be skipped.

When the user terminal UE does not have CA capability (step S107: No), the connection establishment procedure is carried out between the macro base station MeNB and the user terminal UE (step S111). When this establishment procedure is complete, as shown in FIG. 5B, the procedure of releasing the connection between the small base station SeNB and the user terminal UE is carried out (step S112). By this means, communication to use the low frequency band carrier F1 alone is carried out.

Alternatively, when the user terminal UE does not have CA capability (step S107: No), as shown in FIG. 5C, the small base station SeNB may transmit a handover command from the small base station SeNB to the macro base station MeNB, to the user terminal UE (step S113). Here, the handover command is command information for handing over the connection with the small base station SeNB to the connection with the macro base station MeNB. This handover command may be issued based on a command from the macro base station MeNB. In response to this handover command, the user terminal UE carries out the handover procedure from the small base station SeNB to the macro base station MeNB (step S114).

Note that, in the above-described example, in step S107, whether to go on to steps S109 and S110, or to steps S111 and S 112, or to steps S113 and S114 is determined based on whether or not the user terminal UE has CA capability, according to another embodiment of the present invention, under the operation policy of not executing inter-base station carrier aggregation (inter-eNB CA), it is possible to skip step S107 and execute procedures so as to always go on to steps S111 and S112 or to steps S113 and S114.

With the above radio communication method according to the first example of the present invention, even when the user terminal UE is communicating with the small base station SeNB by using the high frequency band carrier F2, the paging signal is received from the macro base station MeNB by using the low frequency band carrier F1. Consequently, it is possible to prevent sound/voice service receiving failures due to coverage holes between the small cells S, and prevent the deterioration of network quality (in particular, the service quality of real-time-based communication such as sound/voice services, receiving sound/voice services and so on).

Note that the above paging signal is not a paging signal for receiving sound/voice, and may be a paging signal to report changes in system information, a paging signal to report an ETWS primary notification or secondary notification, or a paging signal to report a CMAS notification.

FIG. 3B is a diagram to explain the radio communication method according to the second example of the present invention. With the radio communication method according to the second example, the operation of sending out sound/voice calls in the first carrier frequency when the user terminal UE is communicating with the small base station SeNB in the high frequency band carrier F2 will be described.

Hereinafter, procedures that are the same as or equivalent to those in FIG. 3A will not be described again, and parts that are different from those in FIG. 3A will be primarily described. Steps S201, S202 and S203 in FIG. 3B are the same as step S101, step S102 and step S103 in FIG. 3A, respectively, and therefore will not be described again.

In step S204, when the user terminal UE is communicating with the small base station SeNB by using the high frequency band carrier F2, the user terminal UE monitors whether or not the paging signal is transmitted from the macro base station MeNB in the monitoring period of a predetermined cycle. Here, the procedure of monitoring whether or not the paging signal is transmitted may be the same as or equivalent to the paging signal receiving procedure in the idle state, as noted earlier. Also, this procedure of monitoring whether or not the paging signal is transmitted may include the measurement procedure of measuring the radio quality of the serving cell or nearby cells, and the cell reselection procedure of switching the serving cell. Procedures pertaining to this monitoring are the same as those described earlier, and their detailed descriptions will therefore be skipped.

In step S205, a sound/voice service sending procedure is triggered from the user terminal UE. To be more specific, for example, this sending procedure may be triggered as the user presses a sound/voice service sending button (as the user terminal UE accepts a sound/voice service sending request from the user).

When the sending procedure is triggered, the user terminal UE transmits a request for establishing connection (for example, RRC connection and so on), to the macro base station MeNB (step S206). To be more specific, for example, the user terminal UE may transmit this connection establishment request by transmitting an RRC connection request to the macro base station MeNB using a random access procedure.

Note that steps S207 to S214 in FIG. 3B are the same as steps S107 to S114, respectively, and therefore will not be described again.

With the above radio communication method according to the second example of the present invention, even when the user terminal UE is communicating with the small base station SeNB by using the high frequency band carrier F2, if a procedure for sending sound/voice is triggered, the sending procedure is carried out with the macro base station MeNB by using the low frequency band carrier F1. Consequently, it is possible to prevent failures of sending sound/voice services due to coverage holes between small cells S or disconnection after sound/voice services are sent, so that it is possible to prevent the deterioration of network quality (in particular, the service quality of real-time-based communication such as sound/voice services, receiving and sending sound/voice services and so on).

Also, with the radio communication method according to the second example of the present invention, communication to match the paging signal from the macro base station MeNB (for example, real-time-based communication such as sound/voice services) is carried out by using the low frequency band carrier F1. Consequently, it is possible to prevent the deterioration of the service quality of real-time-based communication such as sound/voice service due to coverage holes between small cells S.

Also, with the radio communication method according to the second example of the present invention, inter-base station carrier aggregation is executed only when communication (for example, real-time-based communication such as sound/voice services) to match the paging signal from the macro base station MeNB is carried out. Consequently, compared to the case where inter-base station carrier aggregation is always carried out, it is possible to prevent the power consumption in the user terminal UE from increasing.

FIG. 3C is a diagram to explain the radio communication method according to the third example of the present invention. With the radio communication methods according to the first example and the second example, the handover procedure from the macro base station MeNB to the small base station SeNB is carried out in step S103 (or S203). In this case, in step S104 (Alternatively, step S204), the connection between the user terminal UE and the macro base station MeNB is disconnected, and the state of the user terminal UE is the idle state or an equivalent state to the idle state regarding the low frequency band carrier F1.

With the radio communication method according to the third example, in step S103 (or S203), instead of carrying out the handover procedure from the macro base station MeNB to the small base station SeNB, it is equally possible to establish communication by inter-base station carrier aggregation among the user terminal UE, the macro base station MeNB and the small base station SeNB. In this case, in an equivalent state to step S104 (or step S204), the connection between the user terminal UE and the macro base station MeNB may be set in a sleep state or a DRX state, or a super-long DRX state.

That is, the connection between the user terminal UE and the macro base station MeNB in step S104 (or step S204) may be in a state in which no connection is established (an idle state or an equivalent state to an idle state), or a state in which connection is established but which nevertheless assumes power-save mode (a connected state, which is nevertheless a DRX state or a super-long DRX state).

In this way, the radio communication method according to the third example can be combined with the radio communication methods according to the first and second examples as appropriate. Hereinafter, procedures that are the same as or equivalent to those in FIG. 3A will not be described again, and parts that are different from those in FIG. 3A will be primarily described. Steps S301 and S302 in FIG. 3C are the same as step S101 and step S102 in FIG. 3A, respectively, and therefore will not be described again.

As shown in FIG. 3C, upon detecting the small cell S in step S302, the user terminal UE establishes connection with the small base station SeNB, in addition to the connection with the macro base station MeNB, and establishes a state of communicating with the macro base station MeNB and with the small base station SeNB by using inter-base station carrier aggregation (inter-eNB CA) (step S303).

When the procedure of establishing the state of communicating by using inter-base station carrier aggregation (inter-eNB CA) in step S303 is complete, as shown in FIG. 4A, the user terminal UE communicates with the small base station SeNB by using the high frequency band carrier F2, and the connection with the macro base station MeNB is placed in a sleep state, a DRX state or a super-long DRX state. In this sleep state, DRX state, or super-long DRX state, normal exchange of data signals with the macro base station MeNB does not take place.

Note that the above sleep state, the DRX state or the super-long DRX state may be established between the macro base station MeNB and the user terminal UE soon after the state of communicating by using inter-base station carrier aggregation (inter-eNB CA) is established in step S303, or, instead, it is equally possible to set the above sleep state, DRX state or super-long DRX state between the macro base station MeNB and the user terminal UE after the state of communicating by using inter-eNB CA is established and the user terminal UE carries out data communication with the macro base station MeNB and the small base station SeNB for a while.

In step S304, when the user terminal UE is communicating with the small base station SeNB by using the high frequency band carrier F2, the user terminal UE monitors whether or not the paging signal is transmitted from the macro base station MeNB in the monitoring period of a predetermined cycle. Here, the procedure of monitoring whether or not the paging signal is transmitted may be the same as or equivalent to the paging signal receiving procedure in the idle state, as noted earlier. Also, this procedure of monitoring whether or not the paging signal is transmitted may include the measurement procedure of measuring the radio quality of the serving cell or nearby cells, and the cell reselection procedure of switching the serving cell. Procedures pertaining to this monitoring are the same as those described earlier, and their detailed descriptions will therefore be skipped.

Alternatively, the user terminal UE may be structured so that, when, in step S304, the user terminal UE is communicating with the small base station SeNB using high frequency band carrier F2, the user t terminal UE monitors whether or not a control signal, which is different from the paging signal, is transmitted from the macro base station MeNB in the monitoring period of a predetermined cycle. Note that the procedure of monitoring whether or not the control signal is transmitted may be the same as or equivalent to the paging signal receiving procedure in the idle state, as noted earlier. Also, in addition to the above procedure, in step S304, the user terminal UE may perform the measurement procedure of measuring the radio quality of the serving cell or nearby cells, and the cell reselection procedure of switching the serving cell. Also, this control signal may be, for example, a control signal to command that data communication with the macro base station MeNB be resumed.

Furthermore, as shown in FIG. 4C, the user terminal UE receives the paging signal or the above control signal from the macro base station MeNB in the monitoring period (S305). Upon detecting a call (paging) for the user terminal UE or the above control signal from the macro base station MeNB, the user terminal UE transmits a control signal to request resumption of data communication to the macro base station MeNB (step S306).

The macro base station MeNB, upon receiving the request for resumption of data communication from the user terminal UE, decides whether or not the user terminal UE should communicate with the macro base station MeNB and the small base station SeNB simultaneously (step S307). Whether or not this simultaneous communication is carried out may be determined based on the user terminal UE's capability, or may be determined based on predetermined operation policies and so on. For example, if there is an operation policy to never carry out simultaneous transmission, step S307 may be skipped, and procedures to go onto steps S311 and S312, or steps S313 and S314, may be carried out.

When the above simultaneous communication is carried out (step S307: Yes), the procedure to resume data communication between the macro base station MeNB and the user terminal UE is executed (step S308). When the procedure of resuming data communication with the macro base station MeNB is complete, the user terminal UE transmits a control signal to report this resumption of data communication to the small base station SeNB (step S309).

Note that, before or after step S308, the macro base station MeNB and the small base station SeNB may exchange control signals with each other. To be more specific, for example, the macro base station MeNB and the small base station SeNB may exchange the report of resumption of data communication between the macro base station MeNB and the user terminal, or the control signals for constituting the communication by inter-base station carrier aggregation in step S310. Note that, as noted earlier, when control signals are exchanged between the macro base station MeNB and the small base station SeNB, step S309 may be skipped.

In response to the control signal to report resumption of data communication, as shown in FIG. 5A, communication to use both the low frequency band carrier F1 and the high frequency band carrier F2 is carried out by means of inter-base station carrier aggregation (step S310).

When simultaneous communication is not carried out (step S307: No), the procedure to resume data communication is carried out between the macro base station MeNB and the user terminal UE (step S311). When this procedure of resuming data communication is complete, as shown in FIG. 5B, the procedure to release the connection between the small base station SeNB and the user terminal UE takes place (step S312). By this means, communication to use the low frequency band carrier F1 alone is carried out.

Alternatively, when simultaneous communication is not carried out (step S307: No), as shown in FIG. 5C, the small base station SeNB may transmit a command for a handover from the small base station SeNB to the macro base station MeNB, to the user terminal UE (step S313). Here, the handover command is command information for handing over the connection with the small base station SeNB to the connection with the macro base station MeNB. In response to this handover command, the user terminal UE carries out the handover procedure from the small base station SeNB to the macro base station MeNB (step S314).

### (Structure of Radio Communication System)

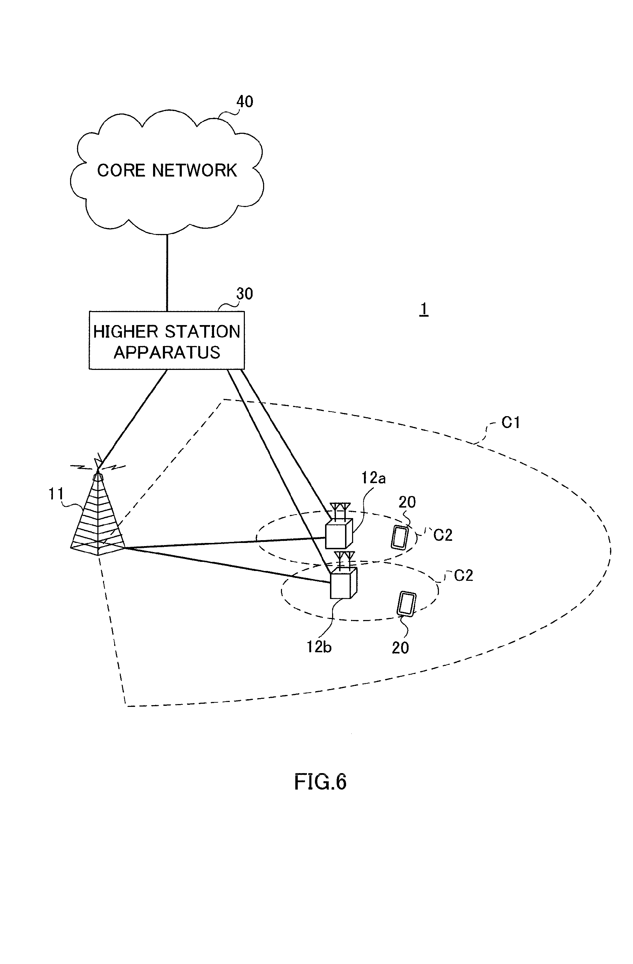

Now, the structure of the radio communication system according to the present embodiment will be described below. In this radio communication system, the above-described radio communication methods are employed. A schematic structure of the radio communication system according to the present embodiment will be described with reference to FIG. 6 to FIG. 8.

FIG. 6 is a schematic structure diagram of the radio communication system according to the present embodiment. Note that the radio communication system shown in FIG. 6 is a system to accommodate, for example, the LTE system, the LTE-A system, IMT-advanced, 4G, or FRA (Future Radio Access). In this radio communication system, carrier aggregation to group a plurality of fundamental frequency blocks (component carriers), where the system band of the LTE system is one unit, may be employed.

As shown in FIG. 6, a radio communication system 1 includes a macro base station 11 that forms a macro cell C1, and small base stations 12a and 12b that form small cells C2, which are placed inside the macro cell C1 and which are narrower than the macro cell C1. Also, in the macro cell C1 and in each small cell C2, user terminals 20 are placed. The user terminals 20 are configured to be able to perform radio communication with both the macro base station 11 and the small base stations 12.

In the macro cell C1, for example, a carrier F1 of a relatively low frequency band such as 800 MHz and 2 GHz (hereinafter referred to as the "low frequency band carrier") is used. In the small cells C2, for example, a carrier F2 of a relatively high frequency band such as 3.5 GHz (hereinafter referred to as the "high frequency band carrier") is used. Note that, in the small cells C2, the low frequency band carrier F1 may be used as in the macro cell C1. Also, the low frequency band carrier F1 may be referred to as a "conventional carrier," a "legacy carrier," a "coverage carrier" and so on. Also, the high frequency band carrier F2 may be referred to as an "additional carrier," a "capacity carrier" and so on.

The macro base station 11 and each small base station 12 are wire-connected via optical fiber or via non-optical fiber such as an X2 interface. When the macro base station 11 and each small base station 12 are connected via optical fiber, intra-base station carrier aggregation (intra-eNB CA) may be carried out. When the macro base station 11 and each small base station 12 are connected via non-optical fiber, inter-base station carrier aggregation (inter-eNB CA) may be carried out. Note that the macro base station 11 and each small base station 12 may be connected by wireless as well.

Alternatively, an example is possible in which connection such as the ones described above is not established between the macro base station 11 and each small base station 12. In this case, the small base stations 12 and the macro base station 11 may exchange necessary information via the user terminals 20.

The macro base station 11 and the small base stations 12 are each connected to a higher station apparatus 30, and are connected to a core network 40 via the higher station apparatus 30. Note that the higher station apparatus 30 may be, for example, an access gateway apparatus, a radio network controller (RNC), a mobility management entity (MME) and so on, but is by no means limited to these. Note that the higher station apparatus 30 may be referred to as a "core network apparatus" or a "control apparatus."

Note that the macro base station 11 is a radio base station having a relatively wide coverage, and may be referred to as an "eNodeB," a "radio base station apparatus," a "transmission point" and so on. Also, the small base stations 12 are radio base stations to have local coverages, and may be referred to as "RRHs (Remote Radio Heads)," "pico base stations," "femto base stations," "Home eNodeBs," "micro base stations," "transmission points" and so on.

Furthermore, a small cell C2 that is formed by a small base station 12 may be a cell in which the PDCCH is arranged in maximum three OFDM symbols at the top of a subframe, or may be a cell (phantom cell) of a type (new carrier type, additional carrier type and so on) in which this PDCCH is not arranged.

The macro base station 11 and the small base stations 12 will be collectively referred to as "radio base station 10," unless distinction needs to be drawn. The user terminals 20 are terminals to support various communication schemes such as LTE, LTE-A and so on, and may include both mobile communication terminals and fixed communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing the system band into bands formed with one or continuous resource blocks, per terminal, and allowing a plurality of terminals to use mutually different bands.

Now, communication channels used in the radio communication system shown in FIG. 6 will be described. Downlink communication channels include a PDSCH (downlink shared data channel), which is used by each user terminal 20 on a shared basis, and downlink L1/L2 control channels (PDCCH, PCFICH, PHICH and EPDCCH). User data and higher control information are transmitted by the PDSCH. Scheduling information for the PDSCH and the PUSCH and so on are transmitted by the PDCCH. The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator CHannel). Also, the scheduling information for the PDSCH and the PUSCH and so on may be transmitted by the EPDCCH. This EPDCCH (enhanced downlink control channel) is frequency-division-multiplexed with the PDSCH.

Uplink communication channels include the PUSCH (uplink shared data channel), which is used by each user terminal 20 on a shared basis, and the PUCCH (Physical Uplink Control CHannel), which is an uplink control channel. User data and higher control information are transmitted by this PUSCH. Also, by means of the PUCCH, downlink radio quality information (CQI: Channel Quality Indicator), ACK/NACK and so on are transmitted.

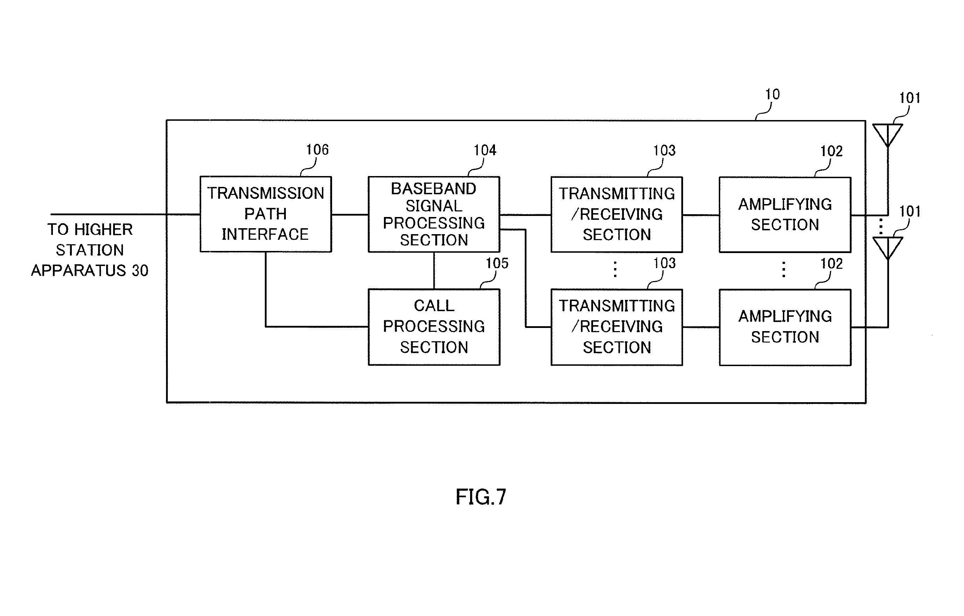

FIG. 7 is a diagram to show an overall structure of a radio base station 10 (which may be either a macro base station 11 or a small base station 12) according to the present embodiment. The radio base station 10 has a plurality of transmitting/receiving antennas 101 for MIMO transmission, amplifying sections 102, transmitting/receiving sections 103, a baseband signal processing section 104, a call processing section 105, and a transmission path interface 106.

User data to be transmitted from the radio base station 10 to a user terminal 20 on the downlink is input from the higher station apparatus 30, into the baseband signal processing section 104, via the transmission path interface 106.

In the baseband signal processing section 104, a PDCP layer process, division and coupling of user data, RLC (Radio Link Control) layer transmission procedures such as an RLC retransmission control transmission procedure, MAC (Medium Access Control) retransmission control, including, for example, an HARQ transmission procedure, scheduling, transport format selection, channel coding, an inverse fast Fourier transform (IFFT) procedure and a precoding procedure are performed, and the result is transferred to each transmitting/receiving section 103. Furthermore, downlink control signals are also subjected to transmission procedures such as channel coding and an inverse fast Fourier transform, and are transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

As for uplink signals, radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, user data that is included in the input uplink signals is subjected to an FFT procedure, an IDFT procedure, error correction decoding, a MAC retransmission control receiving procedure, and RLC layer and PDCP layer receiving procedures, and transferred to the higher station apparatus 30 via the transmission path interface 106. The call processing section 105 performs call processing such as setting up and releasing communication channels, manages the state of the radio base station 10 and manages the radio resources.

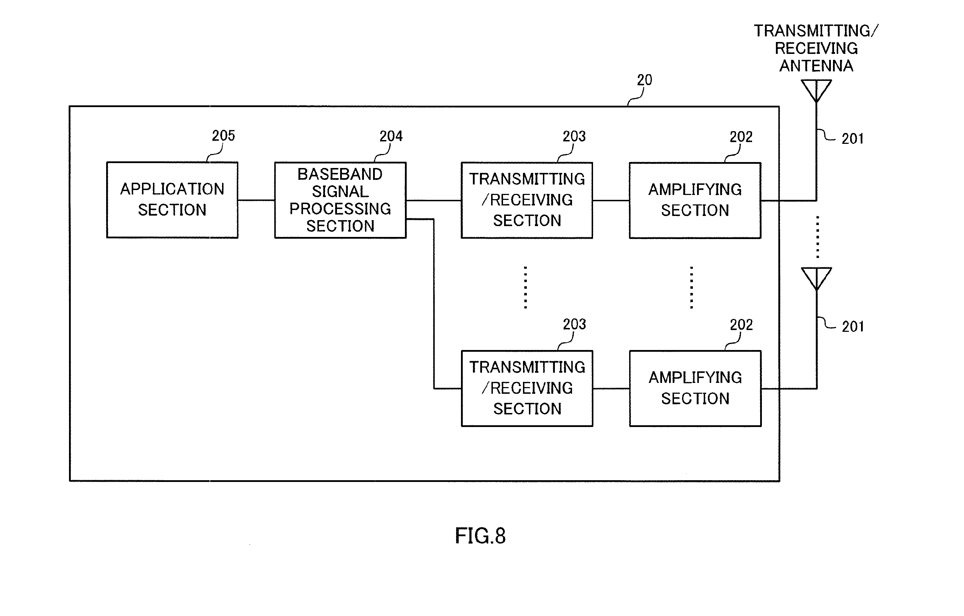

FIG. 8 is a diagram to show an overall structure of a user terminal 20 according to the present embodiment. The user terminal 20 has a plurality of transmitting/receiving antennas 201 for MIMO transmission, amplifying sections 202, transmitting/receiving sections 203, a baseband signal processing section 204 and an application section 205.

As for downlink signals, radio frequency signals that are received in a plurality of transmitting/receiving antennas 201 are each amplified in the amplifying sections 202, subjected to frequency conversion in the transmitting/receiving sections 203, and input in the baseband signal processing section 204. In the baseband signal processing section 204, an FFT procedure, error correction decoding, a retransmission control receiving procedure and so on are performed. User data that in included in the downlink signals is transferred to the application section 205. The application section 205 performs procedures related to higher layers above the physical layer and the MAC layer. Also, in the downlink data, broadcast information is also transferred to the application section 205.

Uplink user data is input from the application section 205 to the baseband signal processing section 204. In the baseband signal processing section 204, a retransmission control (H-ARQ (Hybrid ARQ)) transmission procedure, channel coding, precoding, a DFT procedure, an IFFT procedure and so on are performed, and the result is transferred to each transmitting/receiving section 203. Baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

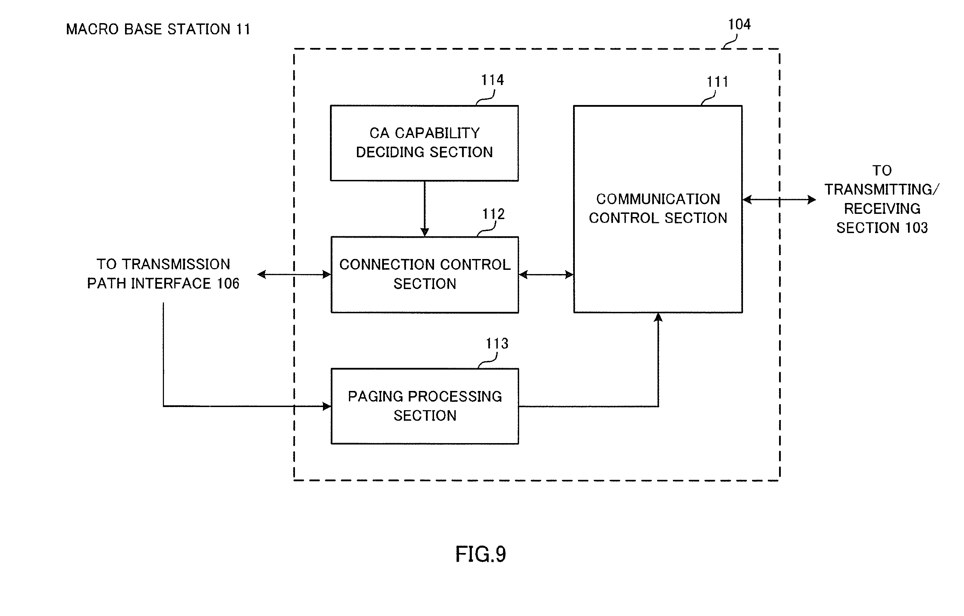

Next, functional structures of a macro base station 11, a small base station 12 and a user terminal 20 will be described in detail with reference to FIG. 9 to FIG. 11. Note that, although functional structures to be assumed when inter-base station carrier aggregation is executed will be described below, these functional structures may be applied, with appropriate changes, even when intra-base station carrier aggregation is executed. Alternatively, the following functional structures may be applicable, with appropriate changes, even when carrier aggregation is not executed, or when the user terminal 20 is not capable of carrier aggregation.

FIG. 9 is a functional structure diagram of the baseband signal processing section 104 provided in the macro base station 11 according to the present embodiment. As shown in FIG. 9, the macro base station 11 has a communication processing section 111, a connection control section 112, a paging processing section 113 and a CA capability deciding section 114. Note that the communication processing section 111 and the transmitting/receiving sections 103 constitute the communication section of the present invention.

The communication processing section 111 performs transmitting/receiving procedures (for example, modulation, demodulation, coding, decoding and so on) for signals using a carrier of a predetermined frequency band that is used with the user terminal 20 (for example, the low frequency band carrier F1). To be more specific, the communication processing section 111 performs the transmission procedure of downlink control information (DCI) using the PDCCH/EPDCCH, and the transmission procedure of higher layer control information or user data using the PDSCH. Also, the communication processing section 111 performs the receiving procedure for uplink control information (UCI) using the PUCCH, and the receiving procedure for higher layer control information or user data using the PUSCH.

The connection control section 112 controls, via the communication processing section 111, the procedure for establishing connection (for example, RRC connection and so on) with the user terminal 20 (establishment procedure), the procedure for releasing that connection (release procedure), the procedure for re-establishing the connection (re-establishment procedure) and so on.

The paging processing section 113 performs the paging procedure for the user terminal 20. For example, when a paging signal is received from the higher station apparatus 30 (for example, MME) via the transmission path interface 106, the paging processing section 113 may control the communication processing section 111 to transmit paging reporting information and the paging signal. As noted earlier, the paging reporting information is report information to report that the paging signal is transmitted from the macro base station 11, and may be, for example, the PDCCH/EPDCCH using P-RNTI. Also, the paging signal may be transmitted by using the PDSCH that is allocated by the PDCCH/EPDCCH using P-RNTI, which is paging reporting information (or by downlink control information (DCI) mapped to that PDCCH/EPDCCH).

The CA capability deciding section 114 decides whether or not the user terminal 20 has capability for carrier aggregation (CA). For example, the CA capability deciding section 114 may decide whether or not the user terminal 20 has CA capability based on CA capability reporting information (for example, UE capability) that is reported from the user terminal 20 in the initial cell connection procedure by the user terminal 20.

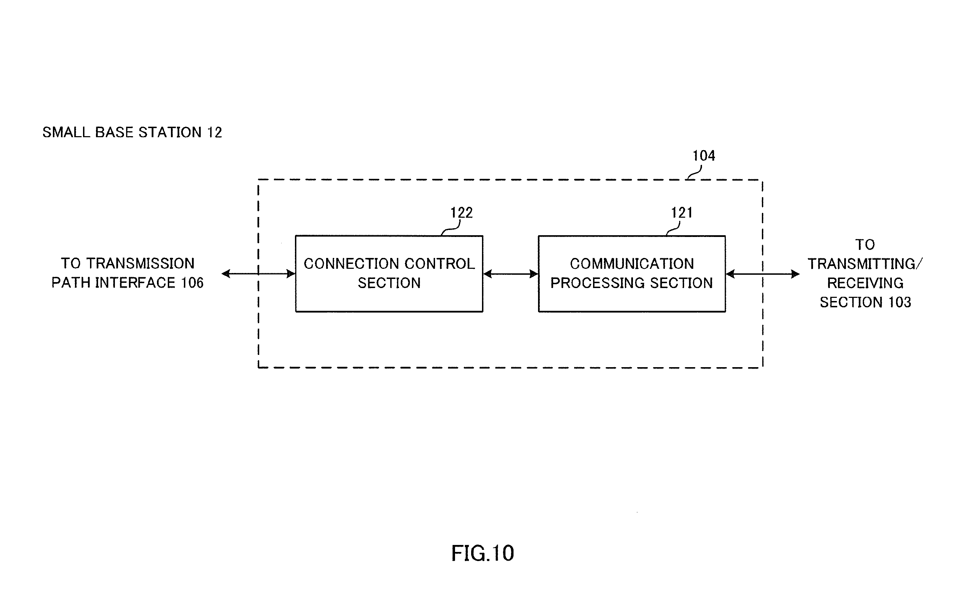

FIG. 10 is a functional structure diagram of the baseband signal processing section 104 provided in the small base station 12 according to the present embodiment. As shown in FIG. 10, the small base station 12 has a communication processing section 121 and a connection control section 122. Note that the communication processing section 121 and the transmitting/receiving section 103 constitute the communication section of the present invention.

The communication processing section 121 performs transmitting/receiving procedures (for example, modulation, demodulation, coding, decoding and so on) for signals using a carrier of a predetermined frequency band that is used with the user terminal 20 (for example, the high frequency band carrier F2). To be more specific, the communication processing section 121 performs the transmission procedure of downlink control information (DCI) using the PDCCH/EPDCCH, and the transmission procedure of higher layer control information or user data using the PDSCH. Also, the communication processing section 121 performs the receiving procedure for uplink control information (UCI) using the PUCCH, and the receiving procedure of higher layer control information or user data using the PUSCH.

Also, the communication processing section 121 may stop the communication by the communication processing section 121 during the monitoring period in which the user terminal 20 monitors whether or not the paging signal is transmitted from the macro base station 11. To be more specific, the communication processing section 121 may stop allocating the PDSCH or the PUSCH to the user terminal 20 in the above monitoring period.

The connection control section 122 controls, via the communication processing section 121, the procedure for establishing connection (for example, RRC connection and so on) with the user terminal 20 (establishment procedure), the procedure for releasing that connection (release procedure), the procedure for re-establishing the connection (re-establishment procedure) and so on.

For example, the connection control section 122 may control the inter-base station carrier aggregation with the macro base station 11 (see FIG. 5A) via the transmission path interface 106 in response to a connection establishment report from the user terminal 20. As noted earlier, the connection establishment report is report information to report that connection with the macro base station 11 has been established.

Also, the connection control section 122 may control the communication processing section 121 to transmit a command for a handover from the small base station 12 to the macro base station 11, to the user terminal 20. As noted earlier, the handover command is command information for handing over the connection with the small base station 12 to the connection with the macro base station 11 (see FIG. 5C).

Note that, as shown in FIG. 10, the small base station 12 may be structured without a paging processing section, unlike the macro base station 11. Alternatively, instead, the small base station 12 may be structured to have a paging processing section like the macro base station 11. In this case, procedures may be carried out so that, for example, the user terminal 20 to receive the paging signal from the macro base station 11 disregards (without trying to receive) the paging signal transmitted from the small base station 12, and other user terminals 20 receive the paging signal transmitted from the small base station 12.

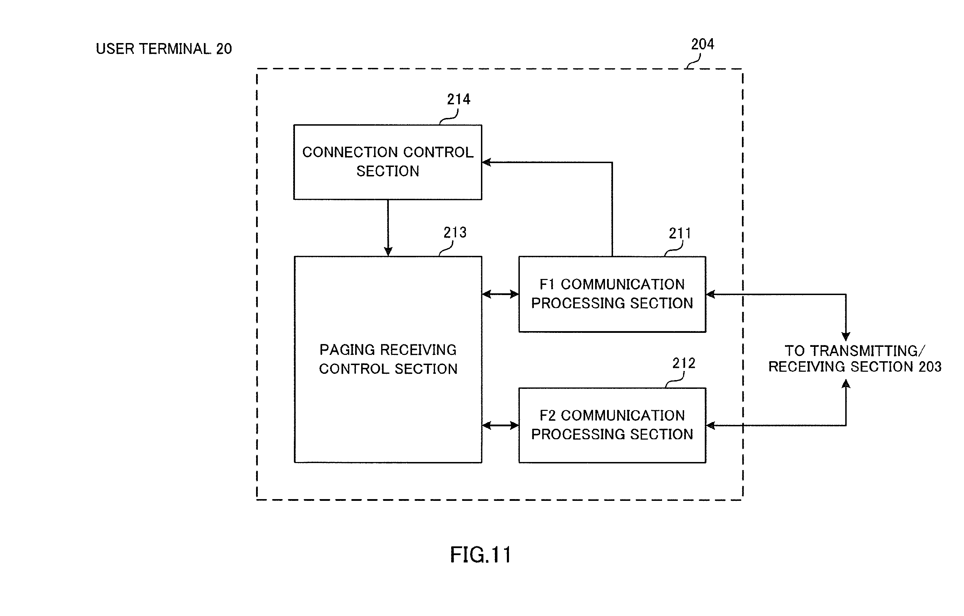

FIG. 11 is a functional structure diagram of the baseband signal processing section 204 provided in the user terminal 20 according to the present embodiment. As shown in FIG. 1, the user terminal 20 has an F1 communication processing section 211, an F2 communication processing section 212, a connection control section 213 and a paging receiving control section 214.

Note that the F1 communication processing section 211 and the transmitting/receiving sections 203 constitute a first communication section according to the present invention. Also, the F2 communication processing section 212 and the transmitting/receiving sections 203 constitute a second communication section according to the present invention. Also, the F1 communication processing section 211 and the F2 communication processing section 212 may be implemented in physically different structures (for example, in different circuits and so on), or may be implemented in the same structure (for example, in the same circuit).

Also, although the user terminal 20 has two communication processing sections --namely, the F1 communication processing section 211 and the F2 communication processing section 212 -- in FIG. 11, this is not necessarily associated with whether or not the user terminal 20 supports carrier aggregation.

That is, the structure shown in FIG. 11 may be applied to both cases where the user terminal 20 supports carrier aggregation and where the user terminal 20 does not support carrier aggregation. That is, when the user terminal 20 supports carrier aggregation, the F1 communication processing section 211 and the F2 communication processing section 212 may carry out communication procedures simultaneously.

Also, when the user terminal 20 does not support carrier aggregation, the F1 communication processing section 211 and the F2 communication processing section 212 may carry out communication procedures at different points in time. Note that these communication procedures to be carried out at different points in time include, for example, physical layer procedures such as a downlink signal receiving procedure, an uplink signal transmission procedure and so on, and, regarding the RLC layer, the PDCP layer and the RRC layer, the communication procedures may be carried out simultaneously. Also, for example, in the MAC layer, part of the communication procedures may be carried out simultaneously, and part of the communication procedures may be carried out at different points in time.

The F1 communication processing section 211 carries out transmitting/receiving procedures (for example, modulation, demodulation, coding, decoding and so on) of signals using a carrier of a predetermined frequency band that is used with the macro base station 11 (for example, the low frequency band carrier F1). To be more specific, the F1 communication processing section 211 performs the receiving procedure of downlink control information (DCI) using the PDCCH/EPDCCH, and the receiving procedure of higher layer control information or user data using the PDSCH. Also, the F1 communication processing section 211 performs the transmission procedure of uplink control information (UCI) using the PUCCH, and the transmission procedure of higher layer control information or user data using the PUSCH.

Also, when the F2 communication processing section 212 is communicating with the small base station 12 using a carrier of a predetermined frequency band (for example, the high frequency band carrier F2), the F1 communication processing section 211 of the present embodiment performs an equivalent reselection procedure to the idle state, in a carrier of a predetermined frequency band (for example, the low frequency band carrier F1). Here, for the equivalent cell reselection procedure to the idle state, it may be possible to perform the procedure of measuring the radio quality -- for example, the RSRP -- of the serving cell and nearby cells, and switching the serving cell if predetermined criteria are met. Procedures pertaining to cell reselection are described in, for example, TS 36.304, chapter 5.2 or in TS 36.133, chapter 4.2.

Even when the F2 communication processing section 212 is communicating with the small base station 12 in a carrier of a predetermined frequency band (for example, the high frequency band carrier F2), the F1 communication processing section 211 performs an equivalent cell reselection procedure to the idle state in a carrier of a predetermined frequency band (for example, the low frequency band carrier F1), so that it is possible to achieve, with respect to the paging signal, equivalent received quality to that achieved conventionally -- that is, to that achieved in a network formed with macro cells C1.

Also, when the F2 communication processing section 212 is communicating with the small base station 12, the F1 communication processing section 211 performs an equivalent cell reselection procedure to the idle state in a carrier of a predetermined frequency band (for example, the low frequency band carrier F1), so that, although there is a possibility that the power consumption in the user terminal UE increases, the cell reselection procedure itself in the idle state is designed based on the premise of achieving lower power consumption, so that it is unlikely that a significant increase of power consumption is caused. In other words, when the F2 communication processing section 212 is communicating with the small base station 12, the F1 communication processing section 211 performs an equivalent cell reselection procedure to the idle state in a carrier of a predetermined frequency band (for example, the low frequency band carrier F1), and the F1 communication processing section 211 or the paging receiving control section 214 performs the paging signal receiving procedure, so that it is possible to achieve lower power consumption, and furthermore achieve, with respect to the paging signal, equivalent received quality to that achieved conventionally -- that is, to that achieved in a network formed with macro cells.

Also, as shown in FIG. 3B, even when a sound/voice sending procedure is triggered while the user terminal 20 is communicating with the small base station 12 by using a carrier of a predetermined frequency band (for example, the high frequency band carrier F2), the F1 communication processing section 211 may be structured to perform the sending procedure with the macro base station 11 by using a carrier of a predetermined frequency band (for example, the low frequency band carrier F1). This sending procedure may be carried out based on a command from the connection control section 213.

The F2 communication processing section 212 performs transmitting/receiving procedures (for example, modulation, demodulation, coding, decoding and so on) of signals using a carrier of a predetermined frequency band (for example, the high frequency band carrier F2) that is used with the small base station 12. To be more specific, the F2 communication processing section 212 carries out the receiving procedure of downlink control information (DCI) using the PDCCH/EPDCCH, and the receiving procedure of higher layer control information or user data using the PDSCH. Also, the F2 communication processing section 212 performs the transmission procedure of uplink control information (UCI) using the PUCCH, and the transmission procedure of higher layer control information or user data using the PUSCH.

The connection control section 213 controls, via the F1 communication processing section 211 or the F2 communication processing section 212, the procedure for establishing connection (for example, RRC connection and so on) with the user terminal 20 (establishment procedure), the procedure for releasing that connection (release procedure), the procedure for re-establishing the connection (re-establishment procedure) and so on.

For example, the connection control section 213 may control the initial cell connection procedure for the macro base station 11 via the F1 communication processing section 211. In this case, the connection control section 213 may transmit the above-noted CA capability reporting information to the macro base station 11 via the F1 communication processing section 211.

Also, when connection with the macro base station 11 is established based on the paging signal, the connection control section 213 may control the F2 communication processing section 212 to carry out the procedure for releasing the connection with the small base station 12.

Also, when connection with the macro base station 11 is established based on the paging signal, the connection control section 213 may control the F1 communication processing section 211 and F2 communication processing section 212 to hand over the connection with the small base station 12 to the connection with the macro base station 11. Note that this handover may be executed based on a handover command from the small base station 12 (see step S113 of FIG. 3).

Also, when connection with the macro base station 11 is established based on the paging signal, the connection control section 213 may transmit a connection establishment report (see step S109 of FIG. 3A) to the small base station 12. As noted earlier, the connection establishment report is report information to report that connection with the macro base station 11 has been established.

Note that, instead of transmitting a connection establishment report to the small base station 12 when connection with the macro base station 11 is established based on the paging signal, the connection control 213 may transmit a control signal to report that the paging signal has been received from the macro base station 11, to the small base station 12.

Also, as shown in FIG. 3B, even when a sound/voice sending procedure is triggered while the user terminal 20 is communicating with the small base station 12 by using a carrier of a predetermined frequency band (for example, the high frequency band carrier F2), the connection control section 213 may be structured to command the F1 communication processing section 211 to perform the sending procedure with the macro base station 11 by using a carrier of a predetermined frequency band (for example, the low frequency band carrier F1). Note that this sound/voice sending procedure may be triggered by the application section 205 in FIG. 8.

The paging receiving control section 214 controls the regular paging receiving procedure. That is, in the idle state, the paging receiving control section 214 control the paging receiving procedure in the serving cell. Alternatively, the paging receiving control section 214 may control receiving procedures with respect to a paging signal to report changes in system information, a paging signal to report an ETWS primary notification or secondary notification, or a paging signal to report a CMAS notification.

Also, when the F2 communication processing section 212 is communicating with the small base station 12, the paging receiving control section 214 according to the embodiment of the present invention controls the paging receiving procedure via the F1 communication processing section 211.

To be more specific, when the F2 communication processing section 212 is communicating with the small base station 12, the paging receiving control section 214 monitors whether or not the paging signal is transmitted from the macro base station 11 in the monitoring period of a predetermined cycle.

For example, the paging receiving control section 214 may monitor whether or not paging reporting information is received in the F1 communication processing section 211 during the monitoring period. As noted earlier, the paging reporting information may be received using the PDCCH/EPDCCH.

Also, when paging reporting information is received in the F1 communication processing section 211 during the monitoring period, the paging receiving control section 214 may control the F1 communication processing section 21 to receive the paging signal from the macro base station 11 based on that paging reporting information. As noted earlier, the paging signal may be received by using the PDSCH that is designated by the PDCCH/EPDCCH using P-RNTI, which is the above-noted paging reporting information (or by DCI mapped to that PDCCH/EPDCCH).

Also, when the paging signal is received in the F1 communication processing section 211, the paging receiving control section 214 may detect a call (paging) for the user terminal UE based on whether or not the user terminal UE's identifier is included in the paging signal. If the user terminal UE's identifier is included in the paging signal, the paging receiving control section 214 may command the connection control section 213 to establish connection with the macro base station 11.

Also, the above-described cell reselection procedure in the F1 communication processing section 211 may be executed in the paging receiving control section 214, instead of the F1 communication processing section 211. Alternatively, measurement procedure and so may be performed in the F1 communication processing section 211, and procedures pertaining to camp-on cell selection and so on may be performed in the paging receiving control section 214.

Also, the paging receiving control section 214 may be furthermore connected to the F2 communication processing section 212 and disregard the paging signal transmitted from the small base station 12 via the F2 communication processing section 212. Alternatively, the paging receiving control section 214 may be structured to perform procedures to receive but nevertheless discard, or not even try to receive, the paging signal transmitted from the small base station 12. In this case, the small base station 12 does not need to choose to transmit/not transmit the paging signal, and can always perform the procedure of transmitting the paging signal, so that it is possible to simplify the procedure.

Note that, with this embodiment, the paging signals to be disregarded may be, for example, part of the paging signal for receiving calls, the paging signal for reporting changes with system information, the paging signal for reporting ETWS primary and secondary notifications and the paging signal for reporting CMAS notifications.

As described above, with the radio communication system 1 according to the present embodiment, even when the user terminal 20 is communicating with the small base station 12, the paging signal is received from the macro base station 11. Consequently, it is possible to prevent failures to receive paging signals due to coverage holes between the small cells C2, and prevent the deterioration of network quality (in particular, the quality of real-time-based communication such as sound/voice services, receiving calls (paging) and so on).

Note that, referring back to the above-described embodiment, when the user terminal 20 is communicating with the small base station 12, the higher station apparatus 30 may determine whether or not the paging signal is received from the macro base station 11.

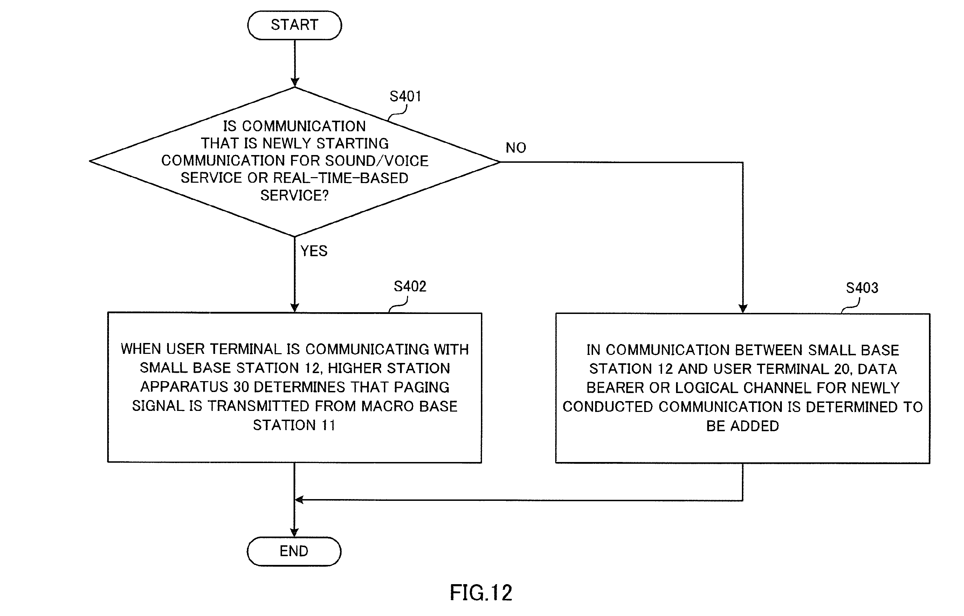

FIG. 12 is a flowchart to show the operation of the higher station apparatus according to a modified example of the present embodiment. As shown in FIG. 12, in step S401, the higher station apparatus 30 determines whether communication to be newly conducted is communication for sound/voice services or communication for real-time-based services.

If this newly conducted communication is communication for sound/voice services or communication for real-time-based services (step S401: Yes), the higher station apparatus 30 determines that the paging signal is transmitted from the macro base station 11 when the user terminal 20 is communicating with the small base station 12 (step S402). In this case, the paging signal is transmitted from the higher station apparatus 30 to the macro base station 11, and the above-described paging signal transmission procedure by the macro base station 11 is carried out. In this case, the small base station 12 does not carry out the procedure of adding a data bearer or a logical channel, which will be described below.

If this communication to be newly conducted is not communication for sound/voice services or communication for real-time-based services (step S401: No), in the communication between the small base station 12 and the user terminal 20, a data bearer or a logical channel for this communication to be newly conducted is determined to be added (step S403). In this case, a control signal for adding the data bearer or the logical channel is transmitted from the higher station apparatus 30 to the small base station 12, and the small base station 12 and the user terminal 20 perform the procedure of adding the data bearer or the logical channel. In this case, the macro base station 11 does not transmit the paging signal for the communication that is newly conducted.

Note that, as noted earlier, the decision pertaining to S401 may be made based on the data type in the communication that is newly started, or may be made based on other indicators such as the UE type (the type of the user terminal 20), UE capabilities (capability information of the user terminal 20), the condition of network traffic jam and so on. Alternatively, the decision may be made based on all of, or at least one of, the indicators.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2012-274880, filed on December 17, 2012, including the specification, drawings and abstract, is incorporated herein by reference in its entirety.

## Claims

1. A user terminal that communicates with at least one of a first radio base station that forms a first cell by using a first carrier frequency and a second radio base station that forms a second cell by using a second carrier frequency such that the second cell overlaps the first cell at least in part, the user terminal comprising:
a first communication section that communicates with the first radio base station; and
a second communication section that communicates with the second radio base station,
wherein, when the second communication section is communicating with the second radio base station, the first communication section receives a paging signal from the first radio base station.

2. The user terminal according to claim 1, wherein, when the second communication section is communicating with the second radio base station in the second carrier frequency, the first communication section monitors whether or not the paging signal is transmitted from the first radio base station in the first carrier frequency, in a monitoring period of a predetermined cycle.

3. The user terminal according to claim 1, wherein, when the second communication section is communicating with the second radio base station, the first communication section measures radio quality of a cell where the paging signal is received and nearby cells, in a first carrier frequency, in a predetermined monitoring period, and carries out a procedure of switching the cell where the paging signal is received, based on the radio quality.

4. The user terminal according to claim 1, wherein the first communication section transmits a connection establishment request to the first radio base station based on the paging signal.

5. The user terminal according to claim 1, wherein, when a sending procedure is triggered, the first communication section transmits a connection establishment request to the first radio base station.

6. The user terminal according to claim 4 or claim 5, wherein, when a connection with the first radio base station is established in response to the connection establishment request, the second communication section releases a connection with the second radio base station.

7. The user terminal according to claim 4 or claim 5, wherein, when a connection with the first radio base station is established in response to the connection establishment request, the second communication section receives, from the second radio base station, command information for commanding handing over a connection with the second radio base station to the connection with the first radio base station.

8. A radio base station that forms a first cell by using a firs carrier such that the first carrier frequency overlaps a second cell formed by using a second carrier frequency at least in part, the radio base station comprising a communication section that communicates with a user terminal,
wherein, when the user terminal is communicating with another radio base station forming a second cell, in the second carrier frequency, the communication section transmits a paging signal to the user terminal in the first carrier frequency.

9. A radio communication method in a user terminal that communicates with at least one of a first radio base station that forms a first cell by using a first carrier frequency and a second radio base station that forms a second cell by using a second carrier frequency such that the second cell overlaps the first cell at least in part, the radio communication method comprising the steps of:
communicating with the second radio base station; and
receiving the paging signal from the first radio base station when communication is in progress with the second radio base station.

10. A control apparatus in a mobile communication system comprising a user terminal that communicates with at least one of a first radio base station that forms a first cell by using a first carrier frequency and a second radio base station that forms a second cell by using a second carrier frequency such that the second cell overlaps the first cell at least in part, and the control apparatus that controls the first radio base station, the second radio base station and the user terminal,
wherein, when the user terminal is communicating with the second radio base station and furthermore monitoring a paging signal from the first radio base station, when communication for newly generated data is started, whether the paging signal is transmitted from the first radio base station, or whether the data is transmitted in communication with the second radio base station, is controlled depending on a type of the data.
